# FASCICULE DE BREVET EUROPEEN

(11) **EP 2 585 234 B1**
(45) Date de publication et mention de la délivrance du brevet: **26.03.2014**
(21) Numéro de dépôt: 11736419.0
(22) Date de dépôt: 20.06.2011
(51) Int. Cl.: B09C 1/00, B09C 1/02, B09C 1/08

(54) **SYSTEME ET PROCEDE POUR ISOLER ET DEPOLLUER UN BLOC DE SOL**
EINRICHTUNG UND VERFAHREN ZUR ISOLIERUNG UND ZUR ENTGIFTUNG EINES BODENBLOCKS
SYSTEM AND PROCESS FOR ISOLATING AND DEPOLLUTING A BLOCK OF SOIL

(30) Priorité: 24.06.2010 FR 1055053
(43) Date de publication de la demande: 01.05.2013
(73) Titulaire: Soletanche Freyssinet, 92500 Rueil Malmaison (FR)
(72) Inventeur: BOUSQUET, Guy, F-75002 Paris (FR); LACAZEDIEU, Marc, F-75013 Paris (FR); STUBLER, Jérôme, F-75016 Paris (FR)
(74) Mandataire: Cabinet Plasseraud
(86) Numéro de dépôt international: PCT/FR2011/051411
(87) Numéro de publication internationale: WO 2011/161366

(56) Documents cités:
- US-A- 4 730 672
- US-A- 5 584 605

## Description

La présente invention concerne l'isolation et la dépollution de sol.

Un bloc de sol peut contenir un ou plusieurs polluants, pour des raisons diverses. Cette pollution peut par exemple provenir de la nature physico-chimique du sol ou de sa contamination par contact avec une substance polluante.

On considère ici n'importe quel type de polluant. A titre d'exemple non limitatif, il peut s'agir de métaux lourds radioactifs (e.g. uranium, plutonium) ou non (e.g. plomb), d'hydrocarbures, ou autre.

Lorsqu'un bloc de sol est pollué, une façon classique de réduire sa nocivité et de limiter la propagation de la pollution est de mettre en oeuvre un confinement statique, par exemple à l'aide de barrières appropriées. Puisque la pollution reste en place, des précautions plus ou moins importantes doivent être prises. Celles-ci peuvent aller jusqu'à une condamnation définitive d'une zone de sécurité entourant le bloc de sol pollué.

Lorsque cela est envisageable, le bloc de sol pollué peut être retiré et placé dans un espace de stockage sécurisé prévu à cet effet. Cependant, le coût du transport et du maintien du bloc de sol dans l'espace de stockage est complexe et onéreux. L'espace de stockage est en outre limité.

Il serait donc préférable de pouvoir assurer une isolation et une dépollution du bloc de sol in situ. Cela permettrait en effet, dans une certaine mesure, de réhabiliter le voisinage du bloc de sol pollué et éviterait les problèmes liés au transport et au maintien du bloc de sol dans un espace stockage sécurisé.

Le brevet US 5,584,605 décrit un procédé pour dépolluer le sol ou des nappes selon le préambule de la revendication 1, en utilisant des tuyaux perforés horizontaux dans ou sous la zone contaminée, une matrice de tuyaux verticaux pour amener en surface du gaz associé à des hydrocarbures afin d'enlever les hydrocarbures et une autre matrice de tuyaux verticaux pour l'injection d'un fluide de lavage.

L'invention propose une solution d'isolation et de dépollution qui répond à la problématique ci-dessus.

A cet effet, l'invention propose un système selon la revendication pour isoler et dépolluer un bloc de sol contenant au moins un polluant. Le système comprend :
- un premier réseau de drains disposés sensiblement verticalement dans le bloc de sol ;
- un premier réseau de connecteurs connectés aux drains du premier réseau de drains ;
- un système d'aspiration de gaz et/ou de fluide ; et
- un système d'injection de fluide non pollué,
caractérisé en ce qu'il comprend en outre des moyens pour relier le premier réseau de connecteurs sélectivement au système d'aspiration ou au système d'injection.

L'usage sélectif de l'aspiration et de l'injection permet, au choix, d'extraire du fluide pollué du bloc de sol ou d'introduire du fluide non pollué dans le bloc de sol via les drains et collecteurs. Ce mécanisme permet une isolation du bloc de sol par confinement dynamique résultant de l'aspiration. Il permet aussi une dépollution du bloc de sol in situ par extraction de polluant. Une série d'injection(s) et d'aspiration(s) permet de laver le bloc de sol progressivement pour tendre vers une dépollution quasi-totale.

L'usage du terme "premier" pour qualifier le réseau de drains et le réseau de connecteurs ne doit pas être interprété comme impliquant nécessairement l'utilisation de plusieurs réseaux de drains et réseaux de connecteurs. Le premier réseau de drains et le premier réseau de connecteurs peuvent être les seuls, bien que l'utilisation de deux réseaux de drains et deux réseaux de connecteurs, voire plus, soit également envisageable.

Lorsqu'on parle de "gaz et/ou fluide", il peut s'agir de gaz (air ou autre) sans liquide ou avec très peu de liquide, de liquide (eau ou autre) sans gaz ou avec très peu de gaz, ou d'un mélange de gaz et de liquide.

Selon des modes de réalisation avantageux qui peuvent être combinés dans toutes les manières envisageables :
- le système comprend en outre un deuxième réseau de drains disposés sensiblement verticalement dans le bloc de sol et sensiblement en alternance avec les drains du premier réseau de drains, et un deuxième réseau de connecteurs connectés aux drains du deuxième réseau de drains, le deuxième réseau de connecteurs étant apte à être relié au système d'aspiration et/ou au système d'injection. Cette duplication des réseaux de drains et de connecteurs permet de créer une circulation de fluide apte à améliorer l'évacuation du polluant présent dans le bloc de sol. Le premier réseau de connecteurs peut par exemple être relié au système d'aspiration tandis que le deuxième réseau de connecteurs est relié au système d'injection (ou inversement) ;
- le système comprend en outre des moyens pour relier le deuxième réseau de connecteurs sélectivement au système d'aspiration ou au système d'injection. De cette façon, les deux ensembles de réseaux peuvent avoir un fonctionnement symétrique ;
- le système d'aspiration de gaz et/ou de fluide est apte à aspirer, au moins momentanément, seulement du gaz, de manière à maintenir le bloc de sol en dépression même en l'absence d'aspiration de fluide. On contribue ainsi à conserver une isolation par confinement dynamique du bloc de sol, même en l'absence de circulation de fluide ;
- le système d'aspiration et le système d'injection sont aptes à ce que, lorsque l'un parmi le premier et le deuxième réseaux de connecteurs est relié au système d'aspiration tandis que l'autre parmi le premier et le deuxième réseaux de connecteurs est relié au système d'injection, la pression résultant de l'injection du fluide non pollué soit inférieure à la dépression résultant de l'aspiration de gaz et/ou du fluide. Ainsi, le polluant peut toujours être évacué vers la surface, en dépit de la pression exercée par l'injection ;
- le système d'aspiration de gaz et/ou de fluide est situé à l'extérieur du bloc de sol ou bien à l'intérieur du bloc de sol, par exemple au sein des drains du premier et/ou du deuxième réseau de drains. Une disposition du système d'aspiration partiellement à l'extérieur du bloc de sol et partiellement à l'intérieur du bloc de sol est également possible. Il en est éventuellement de même pour le système d'injection de fluide non pollué ;
- le bloc de sol est surmonté par un remblai préexistant ou installé lors de la construction du système, les connecteurs du premier et/ou du deuxième réseau de connecteurs étant disposés sensiblement horizontalement dans le remblai ;
- une membrane sensiblement imperméable à l'air et à l'eau recouvre l'éventuel remblai et/ou le bloc de sol. Ceci assure une meilleure dépression et une protection contre la pénétration d'eau de pluie dans l'éventuel remblai et le bloc de sol ;
- le système d'injection est en outre apte à injecter un produit de blocage du polluant. On évite ainsi que du polluant prisonnier du bloc de sol puisse fuir vers le sol non pollué ;
- le produit de blocage contient de l'apatite. Un tel produit s'avère particulièrement efficace pour la dépollution de sol, notamment dans le cas d'une pollution par des métaux lourds, éventuellement radioactifs ;
- le système comprend en outre, en sortie du système d'aspiration, un dispositif de traitement du fluide évacué de manière à en extraire une partie au moins du polluant. Cette mesure permet une dépollution du fluide évacué ;
- le dispositif de traitement comprend un filtre contenant de l'apatite. Un tel traitement permet une dépollution très efficace du fluide évacué, notamment dans le cas d'une pollution par des métaux lourds, éventuellement radioactifs ;
- l'apatite provient de parties de poissons, telles que des arêtes ou des cartilages. Cette forme d'apatite donne des résultats particulièrement performants en termes de dépollution ;
- le système d'injection est relié à la sortie du dispositif de traitement, de manière à recycler une partie au moins du fluide. On optimise ainsi l'usage du fluide ; et/ou
- le système d'injection est apte à injecter, en plus de fluide non pollué, au moins un additif apte à favoriser une séparation du polluant d'avec la matière du bloc de sol ou une mobilité du polluant au sein du bloc de sol. Ceci permet d'évacuer des particules de polluant accrochées au bloc de sol ou statiques au sein du bloc de sol, et donc d'améliorer encore la dépollution.

Selon un autre aspect, l'invention propose un procédé pour isoler et dépolluer un bloc de sol contenant au moins un polluant à l'aide d'un système tel que mentionné ci-dessus, un premier réseau de drains étant disposés sensiblement verticalement dans le bloc de sol, un premier réseau de connecteurs étant connectés aux drains du premier réseau de drains. Selon ce procédé, on relie le premier réseau de connecteurs sélectivement à un système d'aspiration de gaz et/ou de fluide ou à un système d'injection de fluide non pollué.

Le procédé comprend avantageusement des étapes optionnelles correspondant à tout ou partie des moyens listés plus haut en relation avec le système.

D'autres particularités et avantages de la présente invention apparaîtront dans la description ci-après d'exemples de réalisation non limitatifs, en référence aux dessins annexés, dans lesquels :
- la figure 1 est un schéma de principe illustrant un mode de réalisation avantageux de l'invention ;
- la figure 2 est un schéma de principe illustrant une interaction avantageuse entre deux réseaux de drains + collecteurs ;
- la figure 3 est un schéma montrant un détail de fonctionnement de la figure 2 (indiqué par la référence III) ;
- la figure 4 est un schéma de principe illustrant un traitement avantageux d'un fluide à sa sortie d'un système d'aspiration.

Le système de l'invention vise à isoler et à dépolluer un bloc de sol contenant au moins un polluant qui peut être de n'importe quel type comme indiqué en introduction.

Sauf s'il en est disposé autrement par la suite (notamment en ce qui concerne l'ajout d'un système d'injection, l'utilisation de connecteurs en liaison directe avec les drains, etc.), un tel système peut reprendre tout ou partie des éléments du système décrit dans EP 1 075 570. On notera que le système de EP 1 075 570 était destiné et agencé uniquement pour le séchage d'une zone de sol contenant un liquide, et non pour son isolation et sa dépollution.

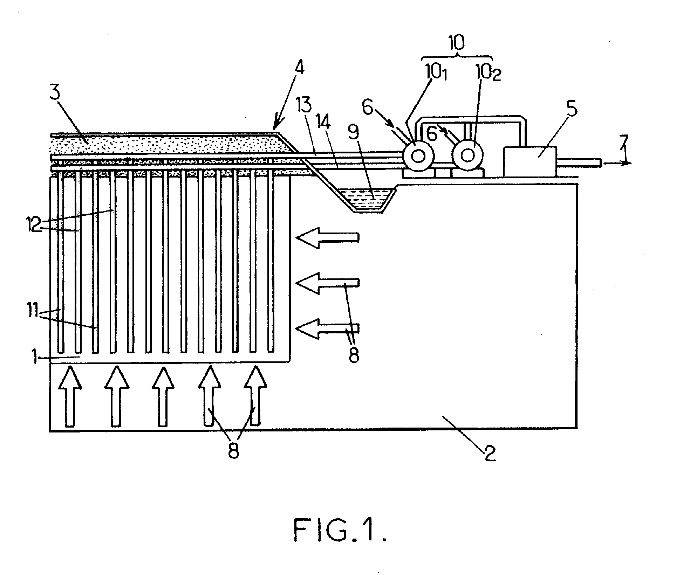

La figure 1 montre un exemple non limitatif de système pouvant être utilisé pour isoler et dépolluer le bloc de sol 1, lequel peut être de tout type envisageable. Le bloc de sol 1 peut représenter la sous-partie polluée d'un sol 2 plus étendu.

Le bloc de sol 1 est éventuellement surmonté par un remblai 3, qui peut être préexistant ou bien installé lors de la construction du système. Ce remblai 3 ne contient avantageusement pas de polluant, du moins lors de son installation sur le bloc de sol 1.

Dans l'exemple de la figure 1, deux réseaux de drains 11 et 12 sont disposés sensiblement verticalement dans le bloc de sol 1. Ces drains verticaux présentent des orifices dans leur partie située dans le bloc de sol 1, de façon qu'un fluide (c'est-à-dire un liquide ou un gaz) présent dans le bloc de sol 1 puisse y pénétrer ou, au contraire, en sortir. Il peut par exemple s'agir de tubes perforés en matière plastique avec un diamètre intérieur e.g. de l'ordre de 50 mm. En variante, il peut s'agir de tubes poreux. D'autres variantes sont bien sûr envisageables.

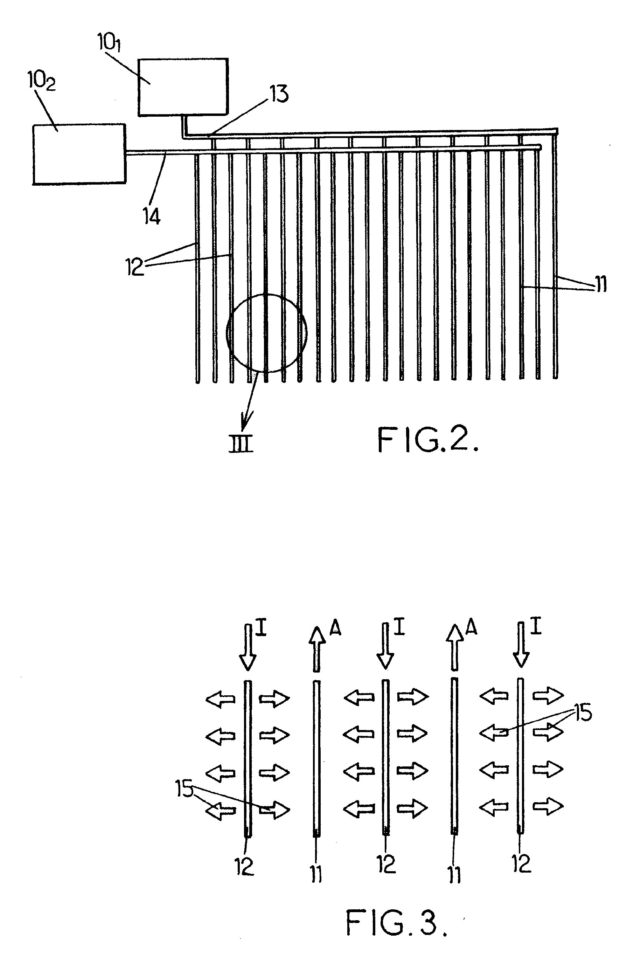

Les drains des deux réseaux sont avantageusement placés en alternance, pour assurer une circulation de fluide entre les deux réseaux comme cela apparaîtra dans la suite par référence à la figure 2. Des mailles carrées avec un espacement de 1 à quelques mètres entre les drains peuvent par exemple être utilisées.

Ces drains peuvent avoir été mis en place dans le bloc de sol 1 à l'aide de forets et/ou de tarauds adaptés à cet effet.

Une extrémité supérieure des drains est avantageusement située dans le remblai.

On notera que, bien que deux réseaux distincts de drains 11 et 12 aient été représentés sur la figure 1, un seul de ces réseaux pourrait être utilisé dans le cadre de l'invention.

La figure 1 montre en outre deux réseaux de connecteurs 13 et 14 connectés respectivement aux réseaux de drains 11 et 12. Les connecteurs 13 sont ainsi connectés aux drains 11 de toutes les manières envisageables. De même, les connecteurs 14 sont connectés aux drains 12. La connexion directe entre les connecteurs et les drains de chaque réseau évite que du fluide éventuellement pollué puisse contaminer le remblai 3 lors de sa circulation entre les drains et les connecteurs.

Dans l'exemple de la figure 1, les réseaux de connecteurs 13 et 14 sont disposés sensiblement horizontalement dans le remblai 3. En variante, l'un de ces réseaux de connecteurs ou les deux pourraient être disposés autrement que de façon horizontale. De même, ils pourraient n'être pas situés dans le remblai 3, mais par exemple dans le bloc de sol 1 ou bien au-dessus de celui-ci.

Lorsque l'invention met en oeuvre un seul réseau de drains (par exemple les drains 11), seul le réseau de connecteurs correspondant est utilisé (par exemple les connecteurs 13).

Le système comprend en outre un système d'aspiration de gaz et/ou de fluide et un système d'injection de fluide non pollué. Ces deux systèmes peuvent par exemple être situés à l'extérieur du bloc de sol 1 et de l'éventuel remblai 3. En variante, l'un de ces systèmes ou les deux pourraient être situé dans le bloc de sol 1. A titre d'exemple, le système d'aspiration de gaz et/ou de fluide pourrait être disposé au partiellement au sein des drains 11 et/ou 12.

Sur la figure 1, les deux systèmes d'aspiration et d'injection ont été représentés, vis-à-vis de chaque réseau de drains et chaque réseau de connecteurs associé, comme faisant partie d'un système 10 unique apte à remplir les deux fonctions sélectivement. En variante, le système d'aspiration et le système d'injection pourraient consister en des systèmes physiquement distincts.

Par ailleurs, le système 10 de la figure 1 comprend deux dispositifs séparés en relation respectivement avec les deux réseaux de drains et réseaux de connecteurs associés. Ainsi le dispositif 10₁ permet, selon le cas, d'assurer l'aspiration et l'injection vis-à-vis des connecteurs 13 et des drains 11, tandis que le dispositif 10₂ permet, selon le cas, d'assurer l'aspiration et l'injection vis-à-vis des connecteurs 14 et des drains 12. En variante, le système 10 pourrait consister en un seul dispositif utilisé en relation avec les deux réseaux de drains et réseaux de connecteurs associés à la fois, plutôt qu'en deux dispositifs 10₁ et 10₂ distincts.

Le réseau de connecteurs 13 est relié sélectivement soit au système d'aspiration de gaz et/ou de fluide soit au système d'injection de fluide non pollué. Cela signifie que le réseau de connecteurs 13 peut, au choix, véhiculer un gaz et/ou un fluide à l'opposé du bloc de sol 1 sous l'effet du système d'aspiration ou bien un fluide non pollué vers le bloc de sol 1 sous l'effet du système d'injection. Une connexion entre le réseau de connecteurs 13 et le système d'aspiration de gaz et/ou et de fluide et/ou le système d'injection de fluide non pollué peut être prévue à cet effet, par exemple à l'extérieur du bloc de sol 1 et du remblai 3.

La sélection de l'injection ou de l'aspiration peut se faire par des moyens quelconques. Une connexion permanente peut exister entre le réseau de connecteurs 13 d'une part et les systèmes d'aspiration et d'injection d'autre part. Dans ce dernier cas, un commutateur peut être utilisé pour activer au choix l'injection ou l'aspiration. Un système de clapets, de vannes ou de soupapes unidirectionnelles peut permettre d'inhiber la fonction non sélectionnée. Par exemple, les connecteurs 13 après traversée de la membrane 4 peuvent être reliés au système d'aspiration ou au système d'injection, un jeu de vannes automatiques isolant la fonction non sélectionnée et connectant la fonction sélectionnée.

La sélection de l'injection ou de l'aspiration par lesdits moyens peut être faite manuellement ou de façon automatisée. Elle peut être déclenchée à des instants déterminés, par exemple de façon périodique, ou bien lors de la survenance de certains événements, par exemple liés à une surveillance d'une quantité de fluide aspiré et/ou d'un niveau de pollution du fluide aspiré.

A titre illustratif, si à un instant donné, la quantité de fluide aspiré devient inférieure à un seuil (ou présente un rythme de décroissance devenant inférieur à un seuil), on passe en mode d'injection par exemple pendant une durée déterminée. Selon un autre exemple non limitatif, si à un instant donné, la quantité de polluant présent dans le fluide aspiré devient inférieure à un seuil (ou présente un rythme de décroissance devenant inférieur à un seuil), on passe en mode d'injection par exemple pendant une durée déterminée.

Lorsque le réseau de connecteurs 13 est relié au système d'aspiration de gaz et/ou de fluide, ce dernier aspire un certain volume ou débit de gaz et/ou de fluide en provenance du remblai 3 et du bloc de sol 1 et en direction du système d'aspiration. Le fluide en question peut être de l'eau ou un autre type de liquide quelconque, ou bien encore un gaz quelconque. Le ou les gaz en question peuvent être de l'air ou un autre type de gaz ou de combinaison de gaz quelconque. Le système d'aspiration peut par exemple comprendre une pompe appropriée, par exemple comme celle décrite dans EP 1 075 570.

Le système d'aspiration est avantageusement prévu pour que le volume ou débit de gaz, e.g. d'air, aspiré crée, dans le bloc de sol 1 et dans l'éventuel remblai 3, une dépression (c'est-à-dire une différence de pression par rapport à la pression atmosphérique) d'au minimum 0,1 bar. Sous l'effet de cette dépression, du fluide présent dans le sol 2 a tendance à être attiré vers le bloc de sol 1, comme cela est illustré par les flèches 8. Au sein du bloc de sol 1, le fluide a tendance à monter vers le remblai 3 par l'intermédiaire du réseau de drains 11.

L'aspiration de fluide réalisée par le système d'aspiration à travers le réseau de connecteurs 13 permet en outre d'accroître la collecte du fluide présent dans le bloc de sol 1 et sa montée dans les drains verticaux 11. Le fluide ainsi aspiré peut être évacué à l'extérieur du bloc de sol 1.

L'aspiration qui vient d'être décrite permet d'obtenir une isolation très intéressante, car en attirant et évacuant le fluide à la surface, on évite au polluant contenu dans le bloc de sol 1 de se propager dans le sol 2. Un tel confinement dynamique évite en outre d'avoir à installer des barrières statiques autour du bloc de sol 1.

Dans l'exemple qui vient d'être décrit, le système d'aspiration est un dispositif unique relié au réseau de connecteurs 13. En variante, plusieurs dispositifs pourraient être utilisés. A titre d'exemple, le dispositif 10₁ pourrait aspirer uniquement du fluide à travers le réseau de connecteurs 13, tandis qu'un autre dispositif serait dédié à l'aspiration de gaz (par exemple de l'air) à travers un autre conduit disposé par exemple horizontalement dans le remblai. Ce conduit n'étant pas en contact avec du fluide pollué, il pourrait comprendre des orifices aptes à améliorer l'aspiration de l'air dans le remblai.

Selon une autre variante, le système d'aspiration pourrait n'effectuer qu'un seul des deux types d'aspiration plutôt que les deux à la fois. Par exemple il pourrait n'aspirer que du fluide (par exemple de l'eau) ou bien que du gaz (par exemple de l'air).

Le système d'injection dispose de fluide non pollué, soit parce qu'il en stocke directement en son sein, soit parce qu'il le reçoit depuis une entrée représentée par la flèche 6 sur la figure 1. Lorsque le réseau de connecteurs 13 est relié au système d'injection, ce dernier injecte à travers les connecteurs 13 un certain volume ou débit de fluide non pollué. Le fluide en question peut être de l'eau ou un autre type de liquide quelconque, ou bien encore un gaz quelconque. Il est avantageusement choisi pour pouvoir être aspiré par le système d'aspiration, bien que ce dernier soit éventuellement capable d'aspirer également d'autres fluides. A titre d'exemple, le système d'aspiration peut être prévu pour aspirer le fluide injecté, mais également l'eau résiduelle présente dans le bloc de sol 1 indépendamment de toute injection.

Sous l'effet de la pression de l'injection, le fluide injecté pénètre dans le réseau de connecteurs 13 et descend dans le réseau associé de drains verticaux 11. Ce faisant, du fluide pénètre dans le bloc de sol 1 par l'intermédiaire des drains 11. Le bloc de sol 1 se charge ainsi de fluide non pollué.

On comprendra ainsi qu'une succession d'injection(s) de fluide non pollué et d'aspiration(s) de gaz et/ou de fluide par activation alternative des systèmes d'injection et d'aspiration permet un nettoyage progressif du bloc de sol 1. En effet, le fluide injecté se charge en polluant présent dans le bloc de sol 1, puis son aspiration permet d'évacuer une partie au moins de ce polluant avec le fluide aspiré.

Une telle dépollution du bloc de sol 1 est particulièrement bien maîtrisée, car la quantité de fluide introduite dans le bloc de sol 1 et évacuée de ce bloc de sol 1 peut être contrôlée avec précision, lors des étapes d'injection et d'aspiration.

En plus de son rôle dans la dépollution du bloc de sol 1, on notera que l'injection de fluide dans les drains verticaux 11, par l'intermédiaire des connecteurs 13, permet leur nettoyage et leur débouchage, notamment lorsque des particules de sol plus ou moins grosses sont parvenues à y pénétrer. On évite ainsi d'avoir à sortir les drains du bloc de sol pour les nettoyer voire les remplacer.

Le réseau de connecteurs 14 associé au réseau de drains verticaux 12 peut fonctionner de manière similaire au réseau de connecteurs 13 associé au réseau de drains verticaux 11. Ainsi, il peut être relié sélectivement au système d'aspiration ou au système d'injection (dispositif 10₂ sur la figure 1).

Dans ce cas, il peut être avantageux, à certains moments, d'utiliser le système d'aspiration et le système d'injection de manière que du fluide non pollué soit injecté dans le réseau de connecteurs 14 alors que le réseau de connecteurs 13 est soumis à une aspiration de gaz et/ou de fluide (ou inversement).

Cette situation est illustrée sur les figures 2 et 3, dans une configuration où les drains 11 et 12 sont disposés de façon alternée dans le bloc de sol 1.

Du fluide non pollué injecté dans le réseau de connecteurs 14 passe dans le bloc de sol 1 en descendant dans les drains 12 correspondants, comme illustré par les flèches 15. Cela crée une circulation de fluide entre les drains 12 et les drains 11 voisins. Sur son chemin, le fluide injecté se charge en polluant au contact du bloc de sol 1. Le fluide parvenant à proximité des drains 11 contient donc du polluant. Sous l'action de l'aspiration concomitante à travers le réseau de connecteurs 13, ce fluide pollué est collecté par les drains 11 et évacué jusqu'au système d'aspiration. La quantité de polluant dans le bloc de sol 1 diminue ainsi.

De façon avantageuse, la pression résultant de l'injection du fluide non pollué dans le réseau de connecteurs 13 est choisie pour être inférieure à la dépression résultant de l'aspiration de gaz et/ou de fluide à travers le réseau de connecteurs 14, par exemple d'au moins 0,1 bar. De cette façon, on s'assure que le fluide continue à monter dans les drains verticaux 11 et que le confinement dynamique du bloc de sol 1 a bien lieu.

Du fait de la capacité de sélection du mode de fonctionnement (injection et/ou aspiration), on peut faire en sorte, à d'autres moments, qu'une aspiration de gaz et/ou de fluide ait lieu à travers les deux réseaux de connecteurs 13 et 14 simultanément. Une telle aspiration est particulièrement efficace. Elle peut être retenue par exemple lorsque le bloc de sol 1 est déjà chargé en fluide (par exemple en eau) sans qu'une injection supplémentaire de fluide soit nécessaire.

On peut encore imaginer, à d'autres moments, une injection simultanée de fluide à travers les deux réseaux de connecteurs 13 et 14.

On notera aussi que la capacité de relier un réseau de connecteurs sélectivement au système d'aspiration ou au système d'injection pourrait être réservée au réseau de connecteurs 13, tandis que le réseau de connecteurs 14 serait soumis soit à une aspiration soit à une injection sans possibilité de commutation entre ces deux modes de fonctionnement.

D'autres configurations encore sont envisageables dans le cadre de la présente invention, comme cela apparaîtra à l'homme du métier. A titre d'exemples, le nombre, la répartition et la géométrie des réseaux de connecteurs et de drains pourraient différer de ce qui a été décrit plus haut.

Dans un mode de réalisation avantageux, le remblai 3 (ou bien le bloc de sol 1 lui-même s'il n'y a pas de remblai) est recouvert par une membrane 4 sensiblement imperméable à l'air et à l'eau. La membrane 4 est aussi éventuellement imperméable au fluide injecté dans le bloc de sol 1 par le système d'injection, pour le cas où ce fluide viendrait à pénétrer dans le remblai 3. De même, elle est aussi éventuellement imperméable au fluide aspiré par le système d'aspiration.

La membrane 4 est par exemple une membrane résistante en caoutchouc ou autre. Une étanchéité périphérique de cette membrane 4 est avantageusement réalisée grâce à une tranchée 9 creusée dans le sol 2 à la périphérie du bloc de sol 1. Cette tranchée 9 est par exemple remplie avec de l'eau et/ou avec un matériau de scellement ou d'étanchéité tel qu'une boue bentonitique. La bordure périphérique de la membrane 4 peut alors être immergée dans la tranchée 9.

L'utilisation d'une membrane 4 permet d'accélérer et d'améliorer l'obtention de la dépression sous l'effet du système d'aspiration. Elle permet en outre de protéger l'éventuel remblai 3 et le bloc de sol 1 contre la pénétration d'eau de pluie et d'autres phénomènes naturels non maîtrisés. Ainsi, la quantité d'eau ou de fluide présent dans le bloc de sol 1 peut être entièrement contrôlée.

Lorsqu'une membrane 4 est utilisée, la connexion entre le réseau de connecteurs 13 et/ou 14 la traverse avantageusement de façon imperméable à l'air et à l'eau, pour conserver dans la mesure du possible les avantages conférés par cette membrane.

L'eau polluée évacuée du bloc de sol 1 peut être traitée de façon à ce qu'une partie au moins du polluant qu'elle contient en soit extraite. A cet effet, un dispositif 5 de traitement du fluide évacué peut être placé en sortie du système d'aspiration 10, par exemple en surface. Ce dispositif de traitement peut par exemple comprendre un filtre adapté au polluant qu'on cherche à extraire. Un tel filtre peut être un filtre conventionnel.

De façon avantageuse, le filtre utilisé peut contenir de l'apatite ou une substance similaire. On rappelle que l'apatite désigne des phosphates hexagonaux de composition assez variable. Les espèces d'apatite comprennent notamment le Chlorapatite Ca5(PO4)3Cl, le Fluorapatite Ca5(PO4)3F et l'Hydroxylapatite Ca5(PO4)3(OH). L'apatite agit en piégeant les ions de certains polluants, comme des métaux lourds, qu'ils soient radioactifs (e.g. uranium, plutonium) ou non (e.g. plomb). Ce piège constitue une matrice très stable, capable d'emprisonner le polluant pendant des durées extrêmement longues.

Bien que l'apatite puisse être utilisée dans le filtre sous une forme synthétisée, on pourra privilégier une forme naturelle de l'apatite provenant par exemple de parties de poissons, telles que des arêtes ou des cartilages, dont les performances sont particulièrement intéressantes dans le cadre d'une dépollution. Ces parties de poissons peuvent être utilisées sans transformation, ou bien après une modification de leur structure comme par exemple un broyage ou mise sous forme de poudre.

Le filtre utilisé peut par exemple comprendre une ou plusieurs cartouches contenant de l'apatite, à travers lesquelles on fait passer le fluide aspiré. Le fluide ainsi filtré est débarrassé d'une partie au moins de son polluant (flèche 7 sur la figure 1).

Le fluide au moins partiellement dépollué en sortie du dispositif de traitement 5 peut ensuite être utilisé à d'autres fins. De façon avantageuse, il peut être recyclé au moins en partie par injection dans le bloc de sol 1. A cet effet, le système d'injection peut être relié à la sortie du dispositif de traitement 5 (la flèche 7 reboucle alors sur la flèche 6), des moyens intermédiaires étant éventuellement placés dans l'intervalle. On limite ainsi la quantité de fluide nécessaire au fonctionnement du système, et on économise des opérations de stockage et de transport de fluide. Des filtrages répétés de fluide, suite à une série d'injections et aspirations, permettent en outre de tendre vers une dépollution totale du fluide résiduel du bloc de sol 1.

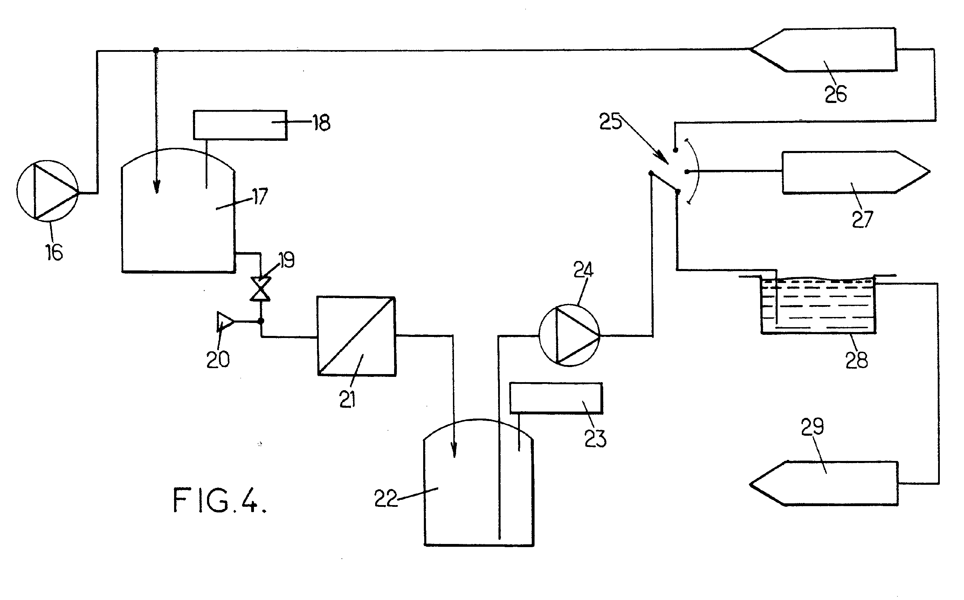

La figure 4 montre un exemple détaillé non limitatif d'opérations pouvant être mises en oeuvre en sortie du système d'aspiration.

La référence 16 représente une pompe à gaz (par exemple à air) et à fluide (par exemple de l'eau) apte à faire partie du système d'aspiration. Cette pompe 16 est par exemple reliée au réseau de connecteurs 13 et/ou au réseau de connecteurs 14 mentionnés plus haut.

Le gaz et le fluide obtenus en sortie de la pompe 16 sont ensuite dirigés vers un réservoir tampon 17. Ce réservoir permet de stocker le fluide et d'évacuer le gaz. Une instrumentation 18 peut être associée au réservoir tampon 17 pour évaluer la propreté du fluide à ce stade. La mesure réalisée par l'instrumentation 18 peut être de toute nature envisageable. Il peut par exemple s'agir d'une mesure de concentration d'un polluant dans le fluide, ou autre. Un capteur de rayonnement peut ainsi être envisagé pour un polluant radioactif. Cette mesure pourra ensuite éventuellement être comparée à une mesure réalisée plus loin, par exemple en sortie du filtre 21, pour contrôler l'efficacité de la chaîne.

Une vanne de régulation 19 est placée en sortie du réservoir tampon 17 pour contrôler le débit de fluide en entrée du filtre 21, par exemple pour tenir compte de la capacité et/ou de l'efficacité de ce dernier.

Un prélèvement 20 d'échantillon de fluide peut avantageusement être effectué à des fins d'analyse plus poussée, par exemple relativement à la propreté du fluide avant son entrée dans le filtre 21.

Le filtre 21 est par exemple un filtre contenant de l'apatite comme décrit plus haut. Plusieurs filtres 21 peuvent être mis en place le cas échéant, en parallèle ou en série, pour augmenter le rendement et/ou l'efficacité du filtrage.

Le fluide au moins partiellement dépollué sous l'effet du filtre 21 est alors introduit dans un nouveau réservoir tampon 22 de collecte.

Une instrumentation 23 peut être associée à ce réservoir pour évaluer la propreté du fluide à ce stade. La mesure effectuée peut être similaire à celle réalisée par l'instrumentation 18. Elle permet de savoir si le filtrage a été efficace, éventuellement en comparaison de la mesure obtenue en amont du filtre 21, et/ou si le filtre 21 ou un des filtres 21 devrait être nettoyé voire remplacé. Un changement de filtre est par exemple à prévoir lorsque l'apatite présente dans ce filtre est saturée en polluant et ne peut donc plus capter de nouveaux ions de polluant.

Une pompe à fluide 24 récupère le fluide contenu dans le réservoir tampon 22 et le dirige vers un embranchement qui s'ouvre sur trois voies distinctes dans l'exemple illustré sur la figure 4. Un commutateur 25 ou autre dispositif d'aiguillage peut permettre de mettre en communication le fluide délivré par la pompe 24 avec l'une des trois voies de façon sélective. La sélection d'une voie peut être asservie aux mesures effectuées par l'instrumentation 24 éventuellement en combinaison avec l'instrumentation 18.

La voie supérieure 26 prévoit un nouveau passage par le filtre 21. Cette voie peut par exemple être retenue lorsque la propreté du fluide mesurée par l'instrumentation 24, éventuellement en comparaison d'une mesure réalisée par l'instrumentation 18, est jugée trop faible, par exemple par rapport à un seuil approprié.

La voie intermédiaire 27 prévoit un rejet du fluide dépollué. Cette option peut par exemple être retenue pour se débarrasser d'un trop plein de fluide.

La voie inférieure, enfin, prévoit un recyclage du fluide dépollué en l'acheminant vers le système d'injection 29 aux fins de son injection dans le bloc de sol à isoler et dépolluer. Cette voie peut n'être retenue que lorsque la propreté du fluide mesurée par l'instrumentation 24, éventuellement en comparaison d'une mesure réalisée par l'instrumentation 18, est jugée satisfaisante, par exemple par rapport à un seuil approprié.

Le bassin 28 disposé entre le commutateur 25 et le système d'injection 29 permet de stocker provisoirement le fluide dépollué et de le ramener à une pression compatible avec son introduction dans le système d'injection 29, par exemple la pression atmosphérique.

L'homme du métier comprendra que les différents moyens décrits en référence à la figure 4 ne constituent que des exemples. De nombreuses variantes en sont possibles.

Selon un mode de réalisation avantageux de l'invention, qui peut être utilisé seul ou en combinaison avec tout autre mode de réalisation décrit plus haut, un produit de blocage de polluant peut être injecté par le système d'injection. Dans ce cas, le produit de blocage suit le même chemin que le fluide injecté, c'est-à-dire qu'il traverse le réseau de connecteurs 13 et/ou 14, puis descend le long du réseau de drains 11 et/ou 12.

Le produit de blocage est choisi avantageusement en relation avec le polluant présent dans le bloc de sol 1. Il peut par exemple contenir de l'apatite.

Il a alors pour effet de fixer le polluant dans le bloc de sol 1, plus particulièrement dans et au voisinage des drains. Le polluant est ainsi bloqué dans une matrice rigide lors de l'activation de l'aspiration. Une telle fixation du polluant évite sa propagation dans le reste du sol 2.

Tout autre produit de blocage approprié est également envisageable. Un tel produit peut par exemple assurer un blocage du polluant par réaction chimique ou de manière mécanique e.g. par fixation dans des logements ou cellules dudit produit.

Selon un autre mode de réalisation avantageux de l'invention, qui peut être utilisé seul ou en combinaison avec tout autre mode de réalisation décrit plus haut, le système d'injection injecte, en plus de fluide non pollué, au moins un additif apte à favoriser une séparation du polluant d'avec la matière du bloc de sol 1. L'additif utilisé (diluant, dissolvant, ou autre) est adapté au polluant présent dans le bloc de sol 1. Il ne devra de préférence pas être lui-même une source de pollution après rinçage.

L'injection de l'additif peut se faire en même temps que celle du fluide non pollué, ou bien indépendamment. Dans tous les cas, l'additif suit le même chemin que le fluide injecté, c'est-à-dire qu'il traverse le réseau de connecteurs 13 et/ou 14, puis descend le long du réseau de drains 11 et/ou 12. Il passe alors dans une certaine mesure dans le bloc de sol 1.

L'additif injecté a pour effet de détacher des particules de polluant accrochées à la matière du bloc de sol 1. Cet effet est par exemple obtenu par réaction permettant de "laver" le sol, selon un principe tensio-actif (par exemple à l'aide de savon naturel), électrochimique, chimique, de diffusion gazeuse ou d'utilisation de bactéries. Les particules détachées sont alors plus à même d'être aspirées avec du fluide lors de l'activation du système d'aspiration. On améliore ainsi la capacité du système à extraire le polluant du bloc de sol 1, et donc à dépolluer ce dernier.

Un système de dosage de l'additif peut être utilisé pour contrôler la quantité d'additif introduite dans le système d'injection et ainsi mieux maîtriser la réaction entre l'additif et la matière du bloc de sol 1.

D'autres variantes et modes de réalisation avantageux peuvent également être envisagées dans le cadre de la présente invention.

## Revendications

1. Système pour isoler et dépolluer un bloc de sol (1) contenant au moins un polluant, le système comprenant :
- un premier réseau de drains (11) disposés sensiblement verticalement dans le bloc de sol ;
- un premier réseau de connecteurs (13) connectés aux drains du premier réseau de drains ;
- un système d'aspiration de gaz et/ou de fluide (10) ; et
- un système d'injection de fluide non pollué (10),
**caractérisé en ce qu'**il comprend en outre des moyens pour relier le premier réseau de connecteurs sélectivement au système d'aspiration ou au système d'injection.

2. Système selon la revendication 1, comprenant en outre un deuxième réseau de drains (12) disposés sensiblement verticalement dans le bloc de sol (1) et sensiblement en alternance avec les drains (11) du premier réseau de drains, et un deuxième réseau de connecteurs (14) connectés aux drains du deuxième réseau de drains, le deuxième réseau de connecteurs étant apte à être relié au système d'aspiration (10) et/ou au système d'injection (10).

3. Système selon la revendication 2, comprenant des moyens pour relier le deuxième réseau de connecteurs (14) sélectivement au système d'aspiration (10) ou au système d'injection (10).

4. Système selon l'une quelconque des revendications précédentes, dans lequel le système d'aspiration de gaz et/ou de fluide (10) est agencé pour aspirer, au moins momentanément, seulement du gaz, de manière à maintenir le bloc de sol (1) en dépression même en l'absence d'aspiration de fluide.

5. Système selon l'une quelconque des revendications précédentes, dans lequel le système d'aspiration (10) et le système d'injection (10) sont agencés pour que, lorsque l'un parmi le premier et le deuxième réseaux de connecteurs (13;14) est relié au système d'aspiration tandis que l'autre parmi le premier et le deuxième réseaux de connecteurs est relié au système d'injection, la pression résultant de l'injection du fluide non pollué soit inférieure à la dépression résultant de l'aspiration du gaz et/ou du fluide.

6. Système selon l'une quelconque des revendications précédentes, pour isoler et dépolluer un bloc de sol (1) surmonté par un remblai (3) préexistant ou installé lors de la construction du système, dans lequel les connecteurs (13;14) du premier et/ou du deuxième réseau de connecteurs sont disposés sensiblement horizontalement dans le remblai.

7. Système selon la revendication 6, comprenant en outre une membrane (4) sensiblement imperméable à l'air et à l'eau pour recouvrir le remblai (3) et/ou le bloc de sol (1).

8. Système selon l'une quelconque des revendications précédentes, dans lequel le système d'injection (10) est agencé pour injecter un produit de blocage du polluant.

9. Système selon la revendication 8, dans lequel le produit de blocage contient de l'apatite.

10. Système selon l'une quelconque des revendications précédentes, comprenant en outre, en sortie du système d'aspiration (10;16), un dispositif de traitement (5;21) du fluide évacué de manière à en extraire une partie au moins du polluant.

11. Système selon la revendication 10, dans lequel le dispositif de traitement (5;21) comprend un filtre contenant de l'apatite.

12. Système selon la revendication 9 ou 11, dans lequel l'apatite provient de parties de poissons, telles que des arêtes ou des cartilages.

13. Système selon l'une quelconque des revendications 10 à 12, dans lequel le système d'injection (10;29) est relié à la sortie du dispositif de traitement (5;21), de manière à recycler une partie au moins du fluide.

14. Système selon l'une quelconque des revendications précédentes, dans lequel le système d'injection (10) est apte à injecter, en plus de fluide non pollué, au moins un additif apte à favoriser une séparation du polluant d'avec la matière du bloc de sol (1) ou une mobilité du polluant au sein du bloc de sol.

15. Procédé pour isoler et dépolluer un bloc de sol (1) contenant au moins un polluant à l'aide d'un système selon l'une quelconque des revendications précédentes, un premier réseau de drains (11) étant disposés sensiblement verticalement dans le bloc de sol, un premier réseau de connecteurs (13) étant connectés aux drains du premier réseau de drains, dans lequel on relie le premier réseau de connecteurs sélectivement à un système d'aspiration de gaz et/ou de fluide (10) ou à un système d'injection de fluide non pollué (10).

## Patentansprüche

1. System, um einen Boden-Block (1), der wenigstens einen Schadstoff enthält, zu isolieren und zu säubern, wobei das System umfasst:
- ein erstes Netz von Drainage-Leitungen (11), die im Wesentlichen vertikal in dem Boden-Block angeordnet sind,
- ein erstes Netz von Anschlüssen (13), die mit den Drainage-Leitungen von dem ersten Netz von Drainage-Leitungen verbunden sind,
- ein System zum Ansaugen von Gas oder/und Fluid (10) und
- ein System zur Injektion von nicht verschmutztem Fluid (10),
**dadurch gekennzeichnet, dass** es weiterhin Mittel umfasst, um das erste Netz von Anschlüssen selektiv mit dem System zum Ansaugen oder mit dem System zur Injektion zu verbinden.

2. System nach Anspruch 1, weiter umfassend ein zweites Netz von Drainage-Leitungen (12), die im Wesentlichen vertikal in dem Boden-Block (1) angeordnet sind, und im Wesentlichen abwechselnd mit den Drainage-Leitungen (11) von dem ersten Netz von Drainage-Leitungen, und ein zweites Netz von Anschlüssen (14), die mit den Drainage-Leitungen von dem zweiten Netz von Drainage-Leitungen verbunden sind, wobei das zweite Netz von Anschlüssen dazu geeignet ist, mit dem System zum Ansaugen (10) oder/und mit dem System zur Injektion (10) verbunden zu werden.

3. System nach Anspruch 2, umfassend Mittel, um das zweite Netz von Anschlüssen (14) selektiv mit dem System zum Ansaugen (10) oder dem System zur Injektion (10) zu verbinden.

4. System nach einem der vorhergehenden Ansprüche, wobei das System zum Ansaugen von Gas oder/und Fluid (10) angeordnet ist, um wenigstens zeitweise nur Gas auf eine Weise anzusaugen, dass der Boden-Block (1) unter einem Unterdruck gehalten wird, auch in der Abwesenheit einer Fluid-Ansaugung.

5. System nach einem der vorhergehenden Ansprüche, wobei das System zum Ansaugen (10) und das System zur Injektion (10) angeordnet sind, um dann, wenn das eine aus dem ersten und dem zweiten Netz von Anschlüssen (13; 14) mit dem System zum Ansaugen verbunden ist, während das andere aus dem ersten und dem zweiten Netz von Anschlüssen mit dem System zur Injektion verbunden ist, der aus der Injektion des nicht verschmutzten Fluids resultierende Druck kleiner ist als der Unterdruck, welcher aus der Ansaugung des Gases oder/und des Fluids resultiert.

6. System nach einem der vorhergehenden Ansprüche, um einen Boden-Block (1) zu isolieren und zu säubern, der von einer zuvor existierenden oder beim Aufbau des Systems installierten Aufschüttung (3) überragt wird, wobei die Anschlüsse (13; 14) von dem ersten oder/und von dem zweiten Netz von Anschlüssen im Wesentlichen horizontal in der Aufschüttung angeordnet sind.

7. System nach Anspruch 6, weiter umfassend eine Membran (4), die im Wesentlichen undurchlässig für Luft und Wasser ist, um die Aufschüttung (3) oder/und den Boden-Block (1) abzudecken.

8. System nach einem der vorhergehenden Ansprüche, wobei das System zur Injektion (10) dazu eingerichtet ist, ein Produkt zum Blockieren des Schadstoffs zu injizieren.

9. System nach Anspruch 8, wobei das Produkt zum Blockieren Apatit enthält.

10. System nach einem der vorhergehenden Ansprüche, weiter umfassend, am Ausgang von dem System zum Ansaugen (10; 16), eine Einrichtung (5; 21) zur Behandlung des evakuierten Fluids auf solch eine Weise, dass wenigstens ein Teil des Schadstoffs extrahiert wird.

11. System nach Anspruch 10, wobei die Einrichtung (5; 21) zur Behandlung einen Filter umfasst, welcher Apatit enthält.

12. System nach Anspruch 9 oder 11, wobei der Apatit aus Teilen von Fischen stammt, beispielsweise Gräten oder Knorpeln.

13. System nach einem der Ansprüche 10 bis 12, wobei das System zur Injektion (10; 29) mit dem Ausgang der Einrichtung zur Behandlung (5; 21) verbunden ist, so dass wenigstens ein Teil von dem Fluid wiederverwertet wird.

14. System nach einem der vorhergehenden Ansprüche, wobei das System zur Injektion (10) dazu geeignet ist, zusätzlich zu dem nicht verschmutzten Fluid wenigstens einen Zusatz zu injizieren, der dazu geeignet ist, eine Separation des Schadstoffs aus dem Material des Boden-Blocks (1) oder eine Mobilität des Schadstoffs in dem Boden-Block zu fördern.

15. Verfahren zum Isolieren und Säubern eines Boden-Blocks (1), der wenigstens einen Schadstoff enthält, vermittels eines Systems nach einem der vorhergehenden Ansprüche, wobei ein erstes Netz von Drainage-Leitungen (11) im Wesentlichen vertikal in dem Boden-Block angeordnet wird, wobei ein erstes Netz von Anschlüssen (13) mit den Drainage-Leitungen von dem ersten Netz von Drainage-Leitungen verbunden wird, wobei das erste Netz von Anschlüssen selektiv mit einem System zur Ansaugung von Gas oder/und Fluid (10) oder mit einem System zur Injektion von nicht verschmutztem Fluid (10) verbunden wird.

## Claims

1. A system for isolating and decontaminating a block of soil (1) containing at least one contaminant, the system comprising:
- a first network of drains (11) laid substantially vertically in the block of soil;
- a first network of connectors (13) connected to the drains of the first network of drains;
- a gas and/or fluid suction system (10); and
- a system (10) for injecting non-contaminated fluid,
**characterized in that** it further comprises means for connecting the first network of connectors selectively to the suction system or to the injection system.

2. The system as claimed in claim 1, further comprising a second network of drains (12) laid substantially vertically in the block of soil (1) and substantially in alternation with the drains (11) of the first network of drains, and a second network of connectors (14) connected to the drains of the second network of drains, the second network of connectors being able to be connected to the suction system (10) and/or to the injection system (10).

3. The system as claimed in claim 2, comprising means for connecting the second network of connectors (14) selectively to the suction system (10) or to the injection system (10).

4. The system as claimed in any one of the preceding claims, wherein the gas and/or fluid suction system (10) is arranged to suck up, at least temporarily, only gas, so as to keep the block of soil (1) under depression even when no fluid is being sucked up.

5. The system as claimed in any one of the preceding claims, wherein the suction system (10) and the injection system (10) are arranged so that when one out of the first and second networks of connectors (13; 14) is connected to the suction system while the other out of the first and second networks of connectors is connected to the injection system, the pressure resulting from the injection of non-contaminated fluid is lower than the depression caused by sucking-up of the gas and/or of the fluid.

6. The system as claimed in any one of the preceding claims, for isolating and decontaminating a block of soil (1) surmounted by an embankment (3) that already exists or is installed when the system is constructed, wherein the connectors (13; 14) of the first and/or of the second network of connectors are laid substantially horizontally in the embankment.

7. The system as claimed in claim 6, further comprising a substantially air- and water-tight membrane (4) to cover the embankment (3) and/or the block of soil (1).

8. The system as claimed in any one of the preceding claims, wherein the injection system (10) is further arranged for injecting a contaminant-blocking product.

9. The system as claimed in claim 8, wherein the blocking product contains apatite.

10. The system as claimed in any one of the preceding claims, further comprising, at the outlet of the suction system (10; 16), a treatment device (5; 21) for treating the fluid removed so as to extract at least some of the contaminant therefrom.

11. The system as claimed in claim 10, wherein the treatment device (5; 21) comprises a filter containing apatite.

12. The system as claimed in claim 9 or 11, wherein the apatite is derived from fish parts, such as fish bones or cartilage.

13. The system as claimed in any one of claims 10 to 12, wherein the injection system (10; 29) is connected to the outlet of the treatment device (5; 21) so at least some of the fluid can be recycled.

14. The system as claimed in any one of the preceding claims, wherein the injection system (10) is able to inject, in addition to non-contaminated fluid, at least one additive able to encourage the contaminant to separate from the material of the block of soil (1) or to promote the mobility of the contaminant within the block of soil.

15. A method for isolating and decontaminating a block of soil (1) containing at least one contaminant using a system as claimed in any one of the preceding claims, a first network of drains (11) being laid substantially vertically in the block of soil, a first network of connectors (13) being connected to the drains of the first network of drains, wherein the first network of connectors is connected selectively to a gas and/or fluid suction system (10) or to a system (10) for injecting non-contaminated fluid.
